# FASCICULE DE BREVET EUROPEEN

(11) **EP 2 858 884 B1**
(45) Date de publication et mention de la délivrance du brevet: **22.03.2023**
(21) Numéro de dépôt: 13733342.3
(22) Date de dépôt: 05.06.2013
(51) Int. Cl.: B62D 57/024

(54) **ROBOT ROULANT A ROUES**
ROLLENDER ROBOTER MIT RÄDERN
ROLLING ROBOT ON WHEELS

(30) Priorité: 07.06.2012 FR 1201641
(43) Date de publication de la demande: 15.04.2015
(73) Titulaire: NEXTER Systems, 78034 Versailles Cedex (FR)
(72) Inventeur: STEUX, Bruno, F-78400 Chatou (FR); BOURAOUI, Laurent, F-94240 L'Hay-les-Roses (FR)
(74) Mandataire: Cabinet Chaillot
(86) Numéro de dépôt international: PCT/FR2013/051274
(87) Numéro de publication internationale: WO 2013/182809

(56) Documents cités:
- WO-A1-00/73101
- WO-A1-02/10004
- WO-A2-03/049664
- CN-A- 109 204 419
- CN-B- 101 643 096
- FR-A5- 2 190 087
- KR-A- 20120 053 236
- US-A1- 2010 076 598
- US-A1- 2013 231 814

## Description

### Domaine technique de l'invention - art antérieur

L'invention s'inscrit dans le domaine des robots roulants disposant d'un châssis rigide et de roues articulées sur deux axes distincts, et plus particulièrement de tels robots à usage militaire ou pour les applications de sécurité civile.

De tels robots sont munis de différents équipements, par exemple une caméra ou un bras, montés sur le châssis qui occupe une partie de l'espace entre les roues. Ils se déplacent à distance de leur opérateur humain, souvent dans des milieux accidentés, et sont pilotés par radio.

La locomotion par roues est avantageuse par rapport à la locomotion à chenille car les roues permettent au robot de se déplacer rapidement avec un bon rendement énergétique. La légèreté du robot lui permet de se déplacer rapidement. Le nombre de roues est en général de quatre : deux à l'avant et deux à l'arrière, mais un nombre différent est possible.

De tels robots peuvent avoir pour missions, traditionnellement le déminage, mais aussi plus généralement l'inspection d'une zone en intérieur ou en extérieur telle que des locaux ou une rue dans une zone de combat.

On connaît par exemple le robot Dragon Runner de la société Qinetiq. Il se déplace à une vitesse limitée, et n'est pas compatible avec une situation de combat rapproché. Si le terrain est accidenté, il doit être équipé de chenilles et il a alors un poids élevé. On connaît aussi le robot Cobra MkII de la société ECA dédié aux missions d'inspection et d'intervention en intérieur ou en extérieur. Ce robot n'est pas conçu pour monter un rebord de trottoir ou une marche d'escalier, par exemple.

CN 101 643 096 B décrit un robot roulant conforme au préambule de la revendication 1.

### Exposé de l'invention - avantages apportés par celle-ci

Dans le but d'améliorer la sécurité des personnels engagés dans les zones à risque, il est souhaitable de développer des robots capables de se déplacer rapidement, sur n'importe quel terrain, sans avoir à faire de manoeuvre complexe. Ainsi, on souhaite qu'un robot puisse monter un rebord de trottoir ou une marche d'escalier et qu'il le fasse sans perdre de temps, et n'ait pas besoin d'un élan particulier pour y parvenir. Il est aussi important que le robot soit léger pour pouvoir être lancé à la main par son opérateur, et qu'il soit ensuite rapide dans son déplacement, dès les premiers instants suivant sa projection.

Ainsi, il est proposé dans le présent document un robot roulant comprenant des roues articulées autour de deux axes de rotation parallèles, ainsi qu'un châssis présentant une surface inférieure essentiellement plane entre les deux axes de rotation et ayant un profil échancré entre les deux axes de rotation, laquelle surface du châssis présente, entre les deux axes de rotation, un sillon s'étendant parallèlement aux axes de rotation, d'un flanc du robot au flanc opposé, pour permettre au robot de progresser sur un obstacle présentant un angle sans que l'angle ne heurte le châssis entre les axes de rotation.

Le robot est caractérisé par le fait qu'il comprend des batteries placées dans sa partie avant située entre l'un des axes de rotation, qui est un axe avant, et le sillon, l'autre axe de rotation étant un axe arrière, et par le fait que le sillon a globalement un profil en V dont la profondeur et la largeur permettent au robot, compte tenu du diamètre des roues et de leur écartement, de progresser sur un obstacle comportant un angle droit, abordé frontalement, sans que l'angle droit ne heurte le châssis. Ainsi, le robot est en mesure de se déplacer très rapidement en toutes circonstances et d'agir rapidement dans les situations délicates où son opérateur souhaite l'engager, même si des obstacles doivent être escaladés. Un tel robot est capable de prendre part au combat rapproché, pour l'interception d'un adversaire par exemple, notamment en zone urbaine ou en intérieur. Mais il peut aussi avoir des applications de sécurité civile, telle la surveillance d'une prison, ou l'aide au maintien de l'ordre dans des situations de type émeutes.

Le dispositif est caractérisé de plus, dans certains modes de réalisation avantageux, comme suit.

Le sillon peut être à mi-distance des deux axes de rotation. De préférence, le centre de gravité du robot roulant est plus proche de l'axe avant que de l'axe arrière. Par ailleurs, le robot peut comprendre au moins une roue motrice avant ou une roue motrice arrière, et, de manière générale, deux roues avant et deux roues arrière, même si d'autres arrangements sont possibles.

Selon un mode de réalisation particulièrement avantageux, le robot roulant peut se déplacer sur ses roues sur une face ou, une fois retourné, sur une deuxième face, le châssis présentant des surfaces essentiellement planes entre les deux axes de rotation sur chacune des deux faces, chacune de ces surfaces ayant, entre les deux axes de rotation, un sillon s'étendant parallèlement aux axes de rotation pour permettre au robot de progresser sur un obstacle présentant un angle sans que l'angle ne heurte le châssis entre les axes des roues. Ce robot est jetable et renversable, car il peut se déplacer sur une face, ou, une fois retourné, sur sa deuxième face. Il est donc tout particulièrement adapté aux situations de combat. De manière avantageuse, le robot peut être équipé de moteurs sans balais plats pour sa propulsion. Ces moteurs permettent au robot de se déplacer à une très grande vitesse.

Le robot roulant est, dans une version spécifique, conçu pour opérations militaires extérieures. Ainsi, il se distingue par exemple par une structure étanche, l'utilisation de matériaux résistants à la moisissure, comme le polyuréthane pour sa coque, ainsi que résistants au rayonnement solaire et au feu. Ainsi, le robot peut être utilisé sur un terrain d'opération extérieure militaire, et est en mesure de résister durablement aux conditions difficiles qu'il peut rencontrer sur un tel terrain.

### Brève description des figures

L'invention va maintenant être décrite en relation avec les figures annexées suivantes.
La figure 1 présente une vue générale d'un robot selon un mode de réalisation de l'invention.
La figure 2 présente une vue éclatée d'un mode de réalisation d'un robot selon l'invention, le robot étant présenté avec son capot ouvert.
La figure 3 présente une vue du dessus du robot.
La figure 4 présente une vue de côté du robot montant une marche, puis descendant une marche.
La figure 5 présente une autre vue de coupe du châssis du robot de la figure 3.
La figure 6 présente le châssis en vue de trois-quarts.

### Description détaillée

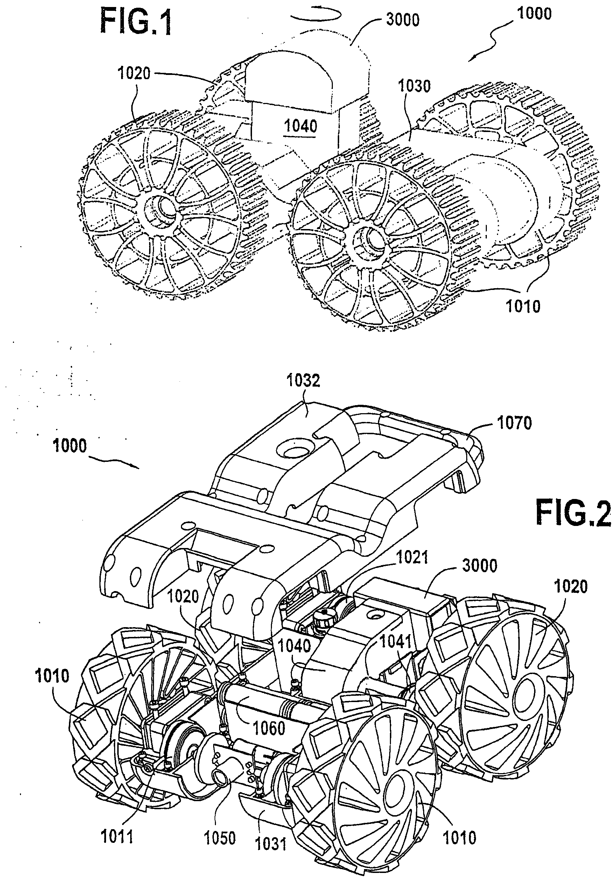

En **figure 1**, on a représenté un mode de réalisation du robot 1000. Le robot 1000 dispose de deux roues avant 1010, coaxiales, et de deux roues arrière 1020, coaxiales, et d'axe de rotation parallèle à l'axe des roues avant 1010. Les roues arrière 1020 sont de même diamètre que les roues avant 1010.

Le robot 1000 comprend de plus un châssis 1030 d'épaisseur inférieure au diamètre des roues, et s'étendant dans le rectangle défini par celles-ci. Les roues sont fixées sur ce châssis 1030 et le robot 1000 admet globalement un plan de symétrie passant par les axes des roues. Les roues définissent deux plans sur lequel le robot peut être posé et se déplacer et qui sont ici parallèles, les roues avant et arrière ayant un même diamètre. Ainsi, le robot dispose de deux faces aux fonctions identiques sur le plan de la locomotion, définissant deux plans de déplacement.

Le robot 1000 est muni d'un bras 1040, par exemple articulé en rotation autour d'un axe parallèle et coplanaire aux axes des roues. Le bras 1040 peut prendre au moins trois configurations. Une première configuration est une configuration de rangement (représentée en figures 2 à 6), dans laquelle le bras est confiné dans le volume du châssis. Ainsi, le robot 1000 peut rouler sur l'une ou l'autre de ses faces, indifféremment, quand le bras 1040 est en position de rangement, celui-ci étant cantonné entre les deux plans de déplacement. Les deux autres configurations du bras sont des configurations de déploiement, dans lesquelles le bras est dressé. Ici, les configurations de déploiement sont atteintes par une rotation de 90° à partir de la configuration de rangement.

Le bras 1040 peut porter une charge utile 3000, visible sur la figure 1 et qui peut être articulée en rotation. Ici, on a représenté sommairement un télémètre 3000, qui est monté en rotation libre multi-tours au sommet du bras 1040 en position de déploiement.

En **figure 2**, on a représenté le robot 1000 avec son châssis 1030 ouvert, de manière à faire apparaître les composants intérieurs. Le bras 1040 est en position de rangement. Le robot 1000 est représenté avec les deux moitiés 1031 et 1032 du châssis séparées l'une de l'autre. Le châssis est par exemple en polyuréthane, mais d'autres matières comme l'ABS peuvent également être utilisées en fonction des choix de conception.

Le châssis soutient les quatre roues 1010 et 1020, qui sont chacune actionnée par un moteur sans balai (moteur « brushless ») plat 1011 et 1021. Ces moteurs sont indépendants les uns des autres et alimentés par des batteries 1060, et commandés par une unité de commande (non représentée) recevant des ordres par radio.

Les roues ne sont pas orientables, mais une commande de vitesse différentes sur les roues de gauche et de droite permet de faire virer le robot d'un côté ou de l'autre. Les moteurs peuvent permettre au robot de se déplacer à de grandes vitesses, par exemple jusqu'à 20 km/h.

Le robot est équipé d'une caméra 1050 placée entre les roues avant sur le châssis 1030. La caméra 1050 est orientable. Le robot peut être équipé de quatre caméras, dont certaines capables de vision de nuit, à haute résolution.

A l'opposé de la caméra, le robot est muni d'une poignée 1070 pour permettre sa manipulation et son transport par un opérateur.

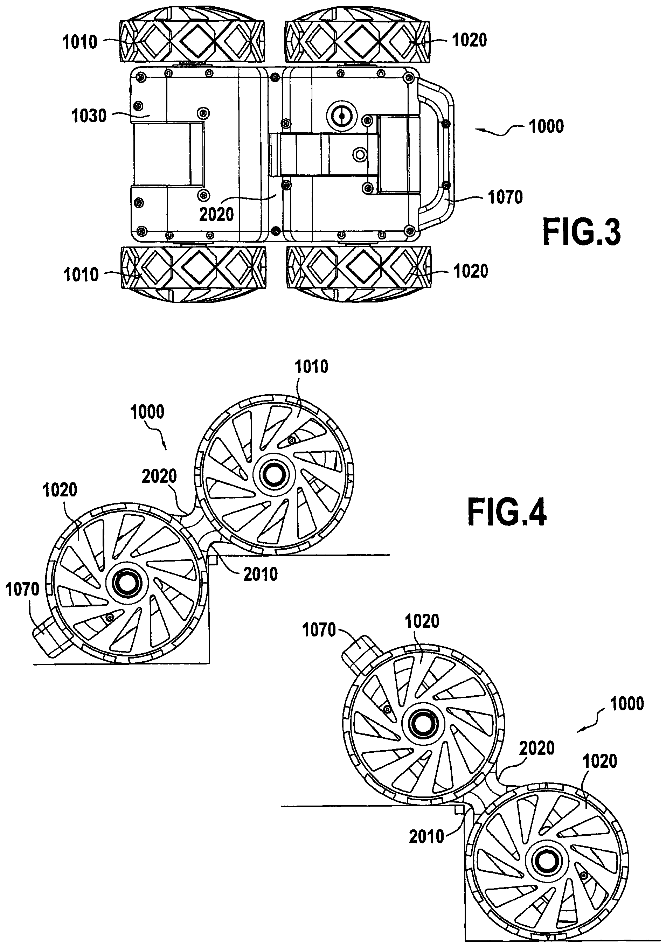

En **figure 3**, on a représenté une vue du dessus du robot 1000. Le robot 1000 possède, de manière tout à fait remarquable, un châssis qui se caractérise par un profil échancré entre les axes des roues avant et des roues arrière. La surface inférieure du châssis, essentiellement plane, est parcourue d'un sillon 2010 parallèle aux axes des roues, d'un flanc du robot au flan opposé. Le sillon a globalement un profil en V.

En **figure 4**, on a représenté le robot 1000 en train de monter sur un obstacle présentant un angle droit, tel qu'une marche d'escalier ou un rebord de trottoir (partie gauche de la figure). Le robot escalade tout d'abord l'obstacle avec ses roues avant, puis compte tenu de la distance entre les roues avant et les roues arrière, se retrouve avec les roues avant en appui sur la face horizontale de la marche, et les roues arrière en appui sur l'autre face de la marche, qui est verticale. Pour éviter que l'angle de la marche ne heurte le châssis dans cette situation, le sillon 2010 a été étudié pour que sa profondeur et sa largeur permettent, compte tenu du diamètre des roues et de leur écartement, de recevoir l'angle de la marche que surmonte le robot. L'angle de la marche vient occuper l'espace vide du sillon, et ne heurte donc pas la surface du châssis. Le robot continu sa progression grâce l'action de ses roues et se hisse complètement sur la marche. Le même principe est utilisé pour descendre d'un obstacle (partie droite de la figure).

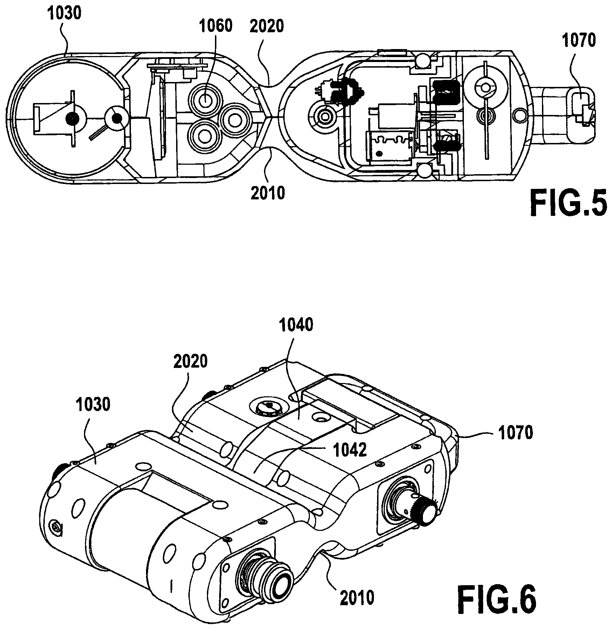

En **figure 5**, on a représenté le châssis 1030 en coupe, dans le plan médian perpendiculaire aux axes des roues. On reconnaît notamment le sillon 2010, mais aussi un sillon 2020 situé sur l'autre face du châssis 1030, et symétrique du sillon 2010. Ainsi, le robot peut rouler sur l'une ou l'autre de ses deux faces, et dans les deux cas, il est prévu de manière remarquable que le profil du châssis soit adapté pour faciliter le franchissement d'obstacles.

On remarque aussi la présence des batteries 1060 dans la partie avant du robot, ce qui a, conjugué aux autres distributions de poids dans la structure, pour conséquence de situer le centre de gravité du robot plus prêt de l'axe des roues avant que de l'axe des roues arrière, et de l'aider à surmonter les obstacles comme les marches.

En **figure 6**, on a représenté le châssis 1030 du robot fermé, sans ses roues. Le bras 1040 est visible, ainsi que la charge 3000 qui est placée à son extrémité. Le bras est en configuration repliée. On observe le sillon 2020, ainsi que le sillon 2010. La base 1042 du bras 1040, quand celui-ci est en position repliée, épouse le profil des sillons 2010 et 2020, de part et d'autre du châssis.

Les pneus des roues sont, comme le châssis, choisis préférentiellement en polyuréthane. La structure est étanche et ignifugée.

L'invention a été décrite en relation avec les figures présentant de modes de réalisation particuliers, mais elle s'étend à toutes les variantes dans le cadre de la portée des revendications.

## Revendications

1. Robot roulant (1000) comprenant des roues (1010, 1020) pour locomotion par roues, articulées autour de deux axes de rotation parallèles, ainsi qu'un châssis (1030) présentant une surface inférieure essentiellement plane entre les deux axes de rotation et ayant un profil échancré entre les deux axes de rotation, laquelle surface du châssis présente, entre les deux axes de rotation, un sillon (2010, 2020) s'étendant parallèlement aux axes de rotation, d'un flanc du robot (1000) au flanc opposé, pour permettre au robot (1000) de progresser sur un obstacle présentant un angle sans que l'angle ne heurte le châssis (1030) entre les axes de rotation, **caractérisé par le fait que** le robot (1000) comprend des batteries (1060) placées dans sa partie avant située entre l'un des axes de rotation, qui est un axe avant, et le sillon (2010, 2020), l'autre axe de rotation étant un axe arrière, et **par le fait que** le sillon (2010, 2020) a globalement un profil en V dont la profondeur et la largeur permettent au robot (1000), compte tenu du diamètre des roues (1010, 1020) et de leur écartement, de progresser sur un obstacle comportant un angle droit, abordé frontalement, sans que l'angle droit ne heurte le châssis (1030).

2. Robot roulant (1000) selon la revendication 1, qui peut se déplacer sur ses roues (1010, 1020) sur une face ou, une fois retourné, sur une deuxième face, le châssis (1030) présentant des surfaces essentiellement planes entre les deux axes de rotation sur chacune des deux faces, chacune de ces surfaces ayant, entre les deux axes de rotation, un sillon (2010, 2020) s'étendant parallèlement aux axes pour permettre au robot (1000) de progresser sur un obstacle présentant un angle sans que l'angle ne heurte le châssis (1030) entre les axes de rotation.

3. Robot roulant (1000) selon l'une des revendications 1 et 2, dans lequel le sillon (2010, 2020) est à mi-distance des deux axes de rotation.

4. Robot roulant (1000) selon l'une des revendications 1 à 3, dans lequel le centre de gravité du robot roulant (1000) est plus proche de l'axe avant que de l'axe arrière.

5. Robot roulant (1000) selon l'une des revendications 1 à 4, dont une roue avant (1010) a le même diamètre qu'une roue arrière (1020).

6. Robot roulant (1000) selon l'une des revendications 1 à 5, comprenant au moins une roue motrice avant (1010) ou une roue motrice arrière (1020).

7. Robot roulant (1000) selon l'une des revendications 1 à 6, comprenant deux roues avant (1010) et deux roues arrière (1020).

8. Robot roulant (1000) selon l'une des revendications 1 à 7, équipé de moteurs sans balais plats pour sa propulsion.

9. Robot roulant (1000) selon l'une des revendications 1 à 8, conçu pour des opérations militaires extérieures.

## Patentansprüche

1. - Rollender Roboter (1000), umfassend Räder (1010, 1020) für die Fortbewegung durch Räder, die um zwei parallele Rotationsachsen angelenkt sind, sowie ein Fahrgestell (1030), das eine im Wesentlichen ebene untere Oberfläche zwischen den beiden Rotationsachsen aufweist und ein hochgezogenes Profil zwischen den beiden Rotationsachsen hat, wobei die Oberfläche des Fahrgestells zwischen den beiden Rotationsachsen eine Furche (2010, 2020) aufweist, die sich parallel zu den Rotationsachsen von einer Flanke des Roboters (1000) zur gegenüberliegenden Flanke erstreckt, um es dem Roboter (1000) zu gestatten, ein Hindernis zu überwinden, das einen Winkel aufweist, ohne dass der Winkel mit dem Fahrgestell (1030) zwischen den Rotationsachsen kollidiert, **dadurch gekennzeichnet, dass** der Roboter Batterien (1060) umfasst, die in seinem vorderen Teil platziert sind, der sich zwischen einer der Rotationsachsen, die eine Vorderachse ist, und der Furche (2010, 2020) befindet, wobei die andere Rotationsachse eine Hinterachse ist, und dadurch, dass die Furche (2010, 2020) allgemein ein V-Profil hat, dessen Tiefe und Breite es dem Roboter (1000) unter Berücksichtigung des Durchmessers der Räder (1010, 1020) und ihres Abstands gestatten, ein frontal angefahrenes Hindernis mit einem rechten Winkel zu überwinden, , ohne dass der rechte Winkel mit dem Fahrgestell (1030) kollidiert.

2. - Rollender Roboter (1000) nach Anspruch 1, der sich auf seinen Rädern (1010, 1020) auf einer Seite fortbewegen kann oder, nach einmaligem Umdrehen, auf einer zweiten Seite, wobei das Fahrgestell (1030) Oberflächen aufweist, die zwischen den beiden Rotationsachsen auf jeder der beiden Seiten im Wesentlichen eben sind, wobei jede dieser Oberflächen zwischen den beiden Rotationsachsen eine Furche (2010, 2020) hat, die sich parallel zu den Achsen erstreckt, um es dem Roboter (1000) zu gestatten, ein Hindernis zu überwinden, das einen Winkel aufweist, ohne dass der Winkel mit dem Fahrgestell (1030) zwischen den Rotationsachsen kollidiert.

3. - Rollender Roboter (1000) nach einem der Ansprüche 1 und 2, wobei die Furche (2010, 2020) auf halbem Abstand der beiden Rotationsachsen ist.

4. - Rollender Roboter (1000) nach einem der Ansprüche 1 bis 3, wobei das Schwerkraftzentrum des rollenden Roboters (1000) näher an der Vorderachse als an der Hinterachse ist.

5. - Rollender Roboter (1000) nach einem der Ansprüche 1 bis 4, von dem ein Vorderrad (1010) denselben Durchmesser wie ein Hinterrad (1020) hat.

6. - Rollender Roboter (1000) nach einem der Ansprüche 1 bis 5, umfassend mindestens ein vorderes Antriebsrad (1010) oder ein hinteres Antriebsrad (1020).

7. - Rollender Roboter (1000) nach einem der Ansprüche 1 bis 6, umfassend zwei Vorderräder (1010) und zwei Hinterräder (1020).

8. - Rollender Roboter (1000) nach einem der Ansprüche 1 bis 7, der mit flachen Motoren ohne Bürsten für seinen Antrieb ausgestattet ist.

9. - Rollender Roboter (1000) nach einem der Ansprüche 1 bis 8, der für Militäroperationen im Außenbereich entwickelt ist.

## Claims

1. - A rolling robot (1000) comprising wheels (1010, 1020) for wheeled locomotion, articulated around two parallel rotation axes, as well as a frame (1030) comprising a bottom surface that is essentially flat between the two rotation axes and having an indented profile between the two rotation axes, wherein said surface of the frame comprises, between the two rotation axes, a groove (2010, 2020) extending in parallel to the rotation axes, from one side of the robot (1000) to the opposite side, to allow the robot (1000) to advance on an obstacle having an angle, without the angle hitting the frame (1030) between the rotation axes, **characterised in that** the robot (1000) comprises batteries (1060) placed in its front half that is located between one of the rotation axes, which is a front axis, and the groove (2010, 2020), the other rotation axis being a rear axis, and **in that** the groove (2010, 2020) has a generally V-profile, the depth and width of which allow the robot (1000), given the diameter of the wheels (1010, 1020) and the spacing thereof, to advance on an obstacle having a right angle, reached at the front, without the right angle hitting the frame (1030).

2. - The rolling robot (1000) according to claim 1, which can move on its wheels (1010, 1020) on one face or, once turned over, on a second face, the frame (1030) comprising surfaces that are essentially flat between the two rotation axes on each of the two faces, each of these surfaces having, between the rotation axes, a groove (2010, 2020) extending in parallel to the axes to allow the robot (1000) to advance on an obstacle having an angle, without the angle hitting the frame (1030) between the rotation axes.

3. - The rolling robot (1000) according to one of claims 1 and 2, wherein the groove (2010, 2020) is midway from the two rotation axes.

4. - The rolling robot (1000) according to one of claims 1 to 3, wherein the center of gravity of the rolling robot (1000) is closer to the front axis than the rear axis.

5. - The rolling robot (1000) according to one of claims 1 to 4, a front wheel (1010) of which has the same diameter as a rear wheel (1020).

6. - The rolling robot (1000) according to one of claims 1 to 5, comprising at least one front drive wheel (1010) or rear drive wheel (1020).

7. - The rolling robot (1000) according to one of claims 1 to 6, comprising two front wheels (1010) and two rear wheels (1020).

8. - The rolling robot (1000) according to one of claims 1 to 7, equipped with flat brushless motors for its propulsion.

9. - The rolling robot (1000) according to one of claims 1 to 8, adapted for outside military operations.
